# FASCICULE DE BREVET EUROPEEN

(11) **EP 2 817 875 B1**
(45) Date de publication et mention de la délivrance du brevet: **06.05.2020**
(21) Numéro de dépôt: 13712833.6
(22) Date de dépôt: 22.02.2013
(51) Int. Cl.: H02M 3/335, H02M 1/36, H02M 1/00

(54) **CONVERTISSEUR CC/CC AVEC DES TRANSFORMATEURS HF ALIMENTÉS PAR DES PONTS COMPLETS**
DC/DC UMRICHTER MIT VON VOLLBRÜCKEN GESPEISTEN HF TRANSFORMATOREN
DC/DC CONVERTER WITH FULLBRIDGE DRIVEN HF TRANSFORMER LINKS

(30) Priorité: 22.02.2012 FR 1251601
(43) Date de publication de la demande: 31.12.2014
(73) Titulaire: Institut Polytechnique de Grenoble, 38500 Grenoble (FR); Centre National de la Recherche Scientifique, 75794 Paris Cedex 16 (FR); Université Joseph Fourier, 38041 Grenoble Cedex 9 (FR)
(72) Inventeur: TRINH, Hieu, 38400 Saint Martin D'heres (FR); ROUGER, Nicolas, 38100 Grenoble (FR); CREBIER, Jean-Christophe, 38100 Grenoble (FR); LEMBEYE, Yves, 38450 Saint Georges De Commiers (FR)
(74) Mandataire: Bronchart, Quentin
(86) Numéro de dépôt international: PCT/FR2013/050367
(87) Numéro de publication internationale: WO 2013/124595

(56) Documents cités:
- DE-A1- 19 827 872
- US-A1- 2010 314 937

## Description

### Domaine de l'invention

La présente invention concerne le domaine des convertisseurs de tension de type continu-continu, et vise plus particulièrement un convertisseur configurable comprenant une pluralité de cellules élémentaires de conversion activables individuellement pour participer à la fourniture d'une tension de sortie. On s'intéresse ici plus particulièrement aux convertisseurs dans lesquels le fonctionnement des cellules élémentaires de conversion est basé sur la réalisation de cycles de transfert d'énergie entre les enroulements primaire et secondaire d'un transformateur d'isolement.

### Exposé de l'art antérieur

On déjà proposé, par exemple dans la demande de brevet US2007/0159862, un convertisseur de tension configurable comprenant une pluralité de cellules élémentaires de conversion ayant des rapports de transformation identiques ou distincts, les cellules étant activables individuellement pour participer à la conversion d'une tension continue d'entrée en une tension continue de sortie. Le rapport de transformation total du convertisseur est lié à la sélection des cellules activées. Ce type de convertisseur présente l'avantage de pouvoir accepter une grande variété de plages de tensions d'entrée et/ou de pouvoir fournir une grande variété de plages de tensions de sortie.

Dans la pratique, il apparaît que réactiver dynamiquement, c'est-à-dire sans cesser de faire fonctionner le convertisseur, une cellule qui a préalablement été déconnectée, peut poser certains problèmes. En effet, dans un convertisseur multicellulaire configurable, chaque cellule élémentaire comprend généralement un élément capacitif d'entrée entre ses bornes d'entrée. Lorsque la cellule est déconnectée, l'élément capacitif d'entrée de cette cellule tend à se décharger, par exemple du fait des fuites inévitablement présentes dans son espace diélectrique, ce qui peut conduire à des pics indésirables de tension ou de courant lorsque la cellule est réactivée. En outre, si l'élément capacitif d'entrée de la cellule est entièrement déchargé, par exemple lorsque la cellule est restée déconnectée pendant une longue période, il peut être impossible de réactiver la cellule sans un apport d'énergie électrique par une source extérieure (réamorçage de la cellule).

Il en résulte que les convertisseurs configurables comprennent généralement au moins une alimentation annexe, spécifiquement dédiée au maintien d'un niveau de charge approprié dans les éléments capacitifs d'entrée des cellules non activées. Plus généralement, les convertisseurs configurables comprennent au moins une alimentation annexe pour assurer la réactivation des cellules déconnectées. Ceci augmente la complexité, l'encombrement, et le coût des convertisseurs.

D'autres exemples de convertisseurs de tension sont décrits dans les documents US2010/314937 et DE19827872.

### Résumé

Ainsi, un objet d'un mode de réalisation de la présente invention est de prévoir un convertisseur configurable comprenant une pluralité de cellules élémentaires de conversion activables individuellement pour participer à la fourniture d'une tension de sortie, ce convertisseur palliant au moins en partie certains des inconvénients des convertisseurs connus.

Un objet d'un mode de réalisation de la présente invention est de prévoir un convertisseur ne nécessitant pas l'utilisation d'une source d'alimentation externe pour réactiver des cellules qui ont été désactivées.

Un objet d'un mode de réalisation de la présente invention est de prévoir un convertisseur ne nécessitant pas l'utilisation d'une source d'alimentation externe pour résoudre les problèmes de reconfiguration liés à la décharge des éléments capacitifs d'entrée des cellules élémentaires de conversion qui ne participent pas à la fourniture de la tension de sortie.

Un objet d'un mode de réalisation de la présente invention est de prévoir un convertisseur dont la structure permet d'optimiser de façon satisfaisante les performances de conversion, et notamment le facteur de qualité et le rendement en puissance, quelle que soit la configuration du convertisseur.

La présente invention est définie par les caractéristiques des revendications indépendantes.

### Brève description des dessins

Ces objets, caractéristiques et avantages, ainsi que d'autres seront exposés en détail dans la description suivante de modes de réalisation particuliers faite à titre non limitatif en relation avec les figures jointes parmi lesquelles :
la figure 1 est un schéma électrique simplifié d'un exemple de convertisseur configurable ;
la figure 2 est un schéma électrique d'un autre exemple de convertisseur configurable ;
la figure 3 est un schéma électrique simplifié d'un mode de réalisation d'un convertisseur configurable ; et
la figure 4 est un schéma électrique plus détaillé d'un exemple de réalisation d'un convertisseur configurable du type décrit en relation avec la figure 3.

### Description détaillée

Par souci de clarté, de mêmes éléments ont été désignés par de mêmes références aux différentes figures. De plus, seuls les éléments utiles à la compréhension de l'invention ont été représentés et décrits. En particulier, les diverses utilisations qui peuvent être faites des convertisseurs configurables décrits n'ont pas été mentionnées, ces convertisseurs étant compatibles avec toutes les utilisations connues des convertisseurs de tension de type continu-continu.

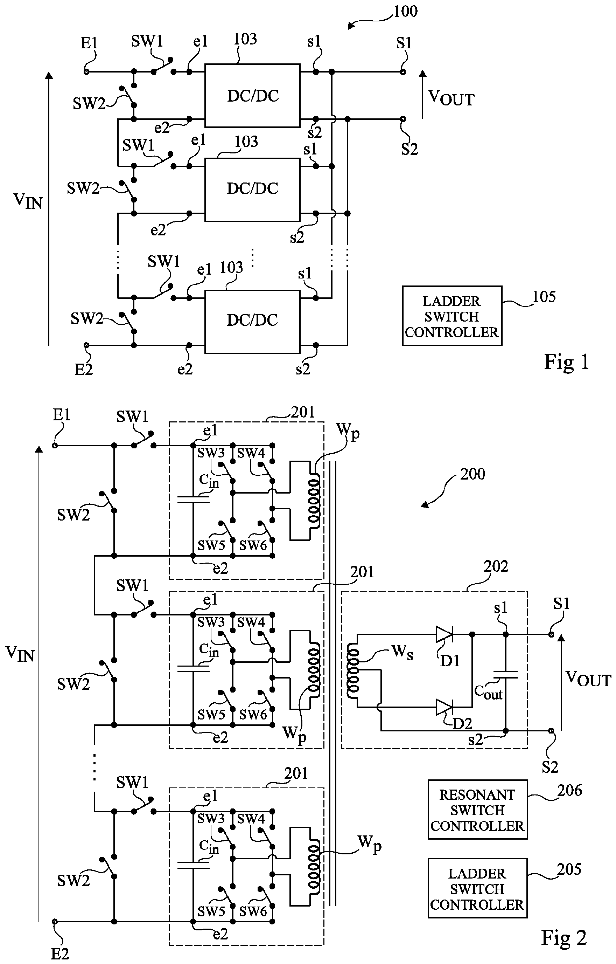

La figure 1 est un schéma simplifié d'un exemple d'un convertisseur 100 du type décrit dans la demande de brevet US2007/0159862 susmentionnée, comprenant une pluralité de cellules élémentaires 103 de conversion de type continu-continu (DC/DC). Le fonctionnement des cellules élémentaires 103 est basé sur la réalisation de cycles de transfert d'énergie entre les enroulements primaire et secondaire d'un transformateur d'isolement. Chaque cellule est activable individuellement pour participer à la conversion d'une tension d'entrée V_{IN} appliquée entre des bornes d'entrée E1 et E2 du convertisseur en une tension de sortie V_{OUT} fournie entre des bornes de sortie S1 et S2 du convertisseur.

Chaque cellule 103 comprend deux bornes d'entrée e1 et e2, et deux bornes de sortie s1 et s2. Les entrées des cellules 103 sont reliées en série entre les bornes d'entrée E1 et E2 du convertisseur. Plus particulièrement, la borne d'entrée e1 de chaque cellule 103 de la série est reliée à la borne d'entrée e2 de la cellule 103 qui la précède, la borne d'entrée e1 de la première cellule 103 de la série étant reliée à la borne d'entrée E1 du convertisseur, et la borne d'entrée e2 de la dernière cellule 103 de la série étant reliée à la borne d'entrée E2 du convertisseur. Les sorties des cellules 103 sont connectées en parallèle entre les bornes de sortie S1 et S2 du convertisseur. Plus particulièrement, les bornes de sortie s1 des cellules élémentaires sont connectées à la borne de sortie S1 du convertisseur, et les bornes de sortie s2 des cellules élémentaires sont connectées à la borne de sortie S2 du convertisseur.

A chaque cellule 103, sont associés deux interrupteurs de configuration SW1 et SW2 agencés comme représenté en figure 1. L'interrupteur SW1 est en série avec la borne d'entrée e1 de la cellule, et plus particulièrement entre la borne d'entrée e1 de la cellule et la borne d'entrée E1 du convertisseur pour la première cellule de la série, et entre la borne d'entrée e1 de la cellule et la borne d'entre e2 de la cellule de rang précédent dans la série pour les autres cellules. L'interrupteur SW2 est en parallèle de l'entrée de la cellule, et plus particulièrement entre la borne e2 et la borne de l'interrupteur SW1 non connectée à la borne e1. Une cellule 103 est activée, et participe à la fourniture de la tension de sortie V_{OUT}, lorsque les interrupteurs SW1 et SW2 associés à cette cellule sont respectivement fermé et ouvert. Une cellule 103 est déconnectée (ou désactivée), et ne participe pas à la fourniture de la tension de sortie V_{OUT}, lorsque les interrupteurs SW1 et SW2 associés à cette cellule sont respectivement ouvert et fermé.

Un circuit 105 de contrôle des interrupteurs de configuration (LADDER SWITCH CONTROLLER) est prévu pour commander l'activation ou la déconnexion (désactivation) des cellules 103. Le circuit 105 peut recevoir en entrée l'une et/ou l'autre des images des tensions d'entrée et de sortie V_{IN} et V_{OUT} du convertisseur, et activer ou déconnecter dynamiquement (en temps réel) des cellules pour ajuster le rapport de transformation total du convertisseur de façon à réguler la tension de sortie V_{OUT}. En d'autres termes, la configuration du convertisseur peut être asservie sur les niveaux de V_{IN} et/ou V_{OUT} de façon à toujours respecter une consigne de conversion donnée.

Dans un tel convertisseur, chaque cellule élémentaire comprend généralement un élément capacitif d'entrée entre ses bornes d'entrée e1 et e2. Pour pouvoir réactiver des cellules déconnectées (non activées), et plus particulièrement pour éviter des problèmes de reconfiguration liés à la décharge des éléments capacitifs d'entrée des cellules déconnectées, il est nécessaire de prévoir au moins une alimentation annexe (non représentée) pour maintenir ces éléments capacitifs à un niveau de charge approprié.

La figure 2 est un schéma illustrant un autre exemple d'un convertisseur 200 du type décrit dans la demande de brevet susmentionnée. Le convertisseur 200 comprend une pluralité de cellules d'entrée 201 couplées à une unique cellule de sortie 202.

Chaque cellule d'entrée 201 comprend un circuit primaire, ce circuit comprenant un enroulement primaire Wp et quatre interrupteurs de découpage, respectivement SW3, SW4, SW5 et SW6, montés en pont complet entre des bornes d'entrée e1 et e2 de la cellule. L'enroulement primaire Wp relie les points milieux des deux bras du pont. Des éléments capacitifs et inductifs de résonance (non représentés) peuvent être connectés en série avec l'enroulement Wp entre les bras du pont pour fixer la fréquence de résonance du circuit primaire. Chaque cellule 201 comprend en outre un élément capacitif Cᵢₙ entre ses bornes d'entrée e1 et e2 pour fixer la tension d'entrée du circuit primaire.

La cellule de sortie 202 comprend un circuit secondaire, ce circuit comprenant un enroulement secondaire Ws et un circuit redresseur dont l'entrée est connectée à des bornes de l'enroulement secondaire Ws et dont la sortie est connectée à des bornes de sortie s1 et s2 de la cellule 202. L'enroulement secondaire Ws est couplé magnétiquement aux enroulements primaires Wp de toutes les cellules d'entrée 201 du convertisseur. Le circuit redresseur est un circuit à deux diodes D1 et D2. La cellule de sortie 202 comprend en outre un élément capacitif Cₒᵤₜ entre ses bornes de sortie s1 et s2.

Les cellules d'entrée 201 sont reliées en série entre des bornes d'entrée E1 et E2 du convertisseur (bornes d'application de la tension d'entrée V_{IN}). Les bornes de sortie s1 et s2 de la cellule de sortie 202 sont connectées respectivement à des bornes de sortie S1 et S2 du convertisseur (bornes de fourniture de la tension de sortie V_{OUT}). A chaque cellule d'entrée 201, sont associés deux interrupteurs de configuration SW1 et SW2 agencés comme dans l'exemple de la figure 1. Comme dans l'exemple de la figure 1, une cellule d'entrée 201 est activée, et participe à la fourniture de la tension de sortie V_{OUT}, lorsque les interrupteurs SW1 et SW2 associés à cette cellule sont respectivement fermé et ouvert, et une cellule d'entrée 201 est déconnectée, et ne participe pas à la fourniture de la tension de sortie V_{OUT}, lorsque les interrupteurs SW1 et SW2 associés à cette cellule sont respectivement ouvert et fermé.

Un circuit 205 de contrôle des interrupteurs de configuration SW1, SW2 (LADDER SWITCH CONTROLLER) est prévu pour commander l'activation ou la déconnexion des cellules d'entrée 201. Un circuit 206 de contrôle des interrupteurs de découpage SW3, SW4, SW5, SW6 (RESONANT SWITCH CONTROLLER) est prévu pour commander le transfert d'énergie depuis le circuit primaire de chaque cellule d'entrée 201 activée, vers le circuit secondaire commun de la cellule de sortie 202.

Lorsqu'une cellule d'entrée 201 du convertisseur 200 est déconnectée, ou non activée, il est prévu de continuer à commander les interrupteurs de découpage SW3, SW4, SW5 et SW6 de cette cellule de façon à maintenir à un niveau de charge approprié la capacité d'entrée Cᵢₙ de la cellule, afin d'éliminer des problèmes de courant d'appel lors de la reconfiguration du convertisseur.

Toutefois, un inconvénient du convertisseur 200 est lié au fait que ce convertisseur comprend une pluralité de circuits primaires activables individuellement couplés à un unique circuit secondaire. Ceci conduit inévitablement à dégrader de façon significative les performances de conversion, et notamment le facteur de qualité et le rendement en puissance, dans certaines configurations du convertisseur.

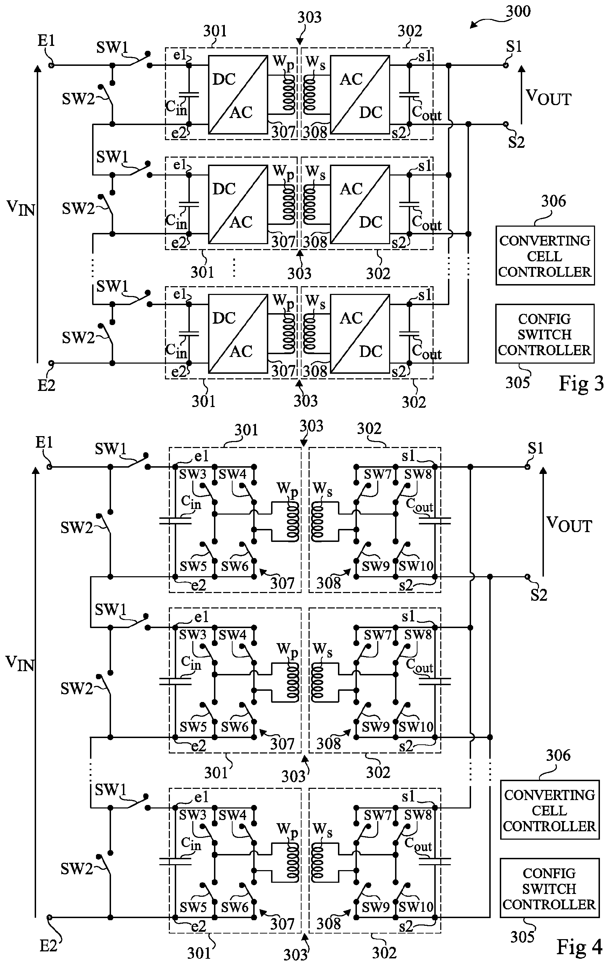

La figure 3 est un schéma électrique simplifié d'un mode de réalisation d'un convertisseur configurable 300 comprenant une pluralité de cellules élémentaires de conversion 303 de type continu-continu, c'est-à-dire au moins deux cellules 303, chaque cellule 303 étant activable individuellement pour participer à la conversion d'une tension d'entrée V_{IN} appliquée entre des bornes d'entrée E1 et E2 du convertisseur, en une tension de sortie V_{OUT} fournie entre des bornes de sortie S1 et S2 du convertisseur.

Chaque cellule de conversion 303 comprend une cellule d'entrée 301 comprenant deux bornes d'entrée e1 et e2, et une cellule de sortie 302, couplée à la cellule d'entrée 301, comprenant deux bornes de sortie s1 et s2. La cellule d'entrée 301 comprend un circuit primaire, ce circuit comprenant un enroulement primaire Wp d'un transformateur et un circuit 307 apte à convertir une tension continue (DC) reçue entre les bornes d'entrée e1 et e2 de la cellule en une tension variable (AC) fournie aux bornes de l'enroulement primaire Wp. La cellule d'entrée 301 comprend en outre un élément capacitif d'entrée Cᵢₙ entre ses bornes e1 et e2 pour fixer la tension appliquée à l'entrée du circuit primaire. La cellule de sortie 302 comprend un circuit secondaire, ce circuit comprenant un enroulement secondaire Ws, couplé à l'enroulement primaire Wp de la cellule d'entrée 301, et un circuit 308 apte à redresser une tension variable (AC) reçue aux bornes de l'enroulement secondaire Ws en une tension continue (DC) fournie aux bornes d'un élément capacitif de sortie Cₒᵤₜ relié entre les bornes de sortie s1 et s2 de la cellule 302.

Ainsi, à la différence du convertisseur 200 de la figure 2 qui comprend une pluralité de circuits primaires couplés à un unique circuit secondaire, le convertisseur 300 comprend une pluralité de circuits primaires et une pluralité de circuits secondaires couplés deux à deux.

Les cellules d'entrée 301 sont reliées en série entre des bornes d'entrée E1 et E2 du convertisseur (bornes d'application de la tension V_{IN}) et les cellules de sorties 302 sont reliées en parallèle entre des bornes de sortie S1 et S2 du convertisseur (bornes de fourniture de la tension de sortie V_{OUT}), par exemple de la façon décrite dans l'exemple de la figure 1. Dans cet exemple, à chaque cellule de conversion 303 sont associés deux interrupteurs de configuration SW1 et SW2 agencés comme dans l'exemple de la figure 1. Ainsi, une cellule de conversion 303 est activée pour participer à la fourniture de la tension de sortie V_{OUT}, lorsque les interrupteurs SW1 et SW2 associés à cette cellule sont respectivement fermé et ouvert, et une cellule de conversion 303 est déconnectée ou désactivée, et ne participe pas à la fourniture de la tension de sortie V_{OUT}, lorsque les interrupteurs SW1 et SW2 associés à cette cellule sont respectivement ouvert et fermé. On notera que dans l'exemple représenté, les interrupteurs SW1 sont reliés aux bornes d'entrée e1 des cellules correspondantes. En variante, on peut prévoir de relier les interrupteurs série SW1 aux bornes d'entrée e2 des cellules (c'est-à-dire sur la branche d'entrée du bas des cellules sur le schéma de la figure 3, plutôt que sur la branche d'entrée du haut).

Un circuit 305 de contrôle des interrupteurs de configuration (CONFIG SWITCH CONTROLLER) est prévu pour commander l'activation ou la déconnexion des cellules élémentaires de conversion 303. Un circuit 306 de contrôle des cellules élémentaires (CONVERTING CELL CONTROLLER) est prévu pour commander le transfert d'énergie depuis le circuit primaire vers le circuit secondaire des cellules activées pour participer à la fourniture de la tension de sortie V_{OUT}.

Selon un aspect d'un mode de réalisation, les cellules élémentaires de conversion 303 sont bidirectionnelles, c'est-à-dire que chaque cellule 303 peut être commandée soit pour transférer de l'énergie du circuit primaire vers le circuit secondaire lorsqu'une source de tension continue est appliquée entre ses bornes e1 et e2, soit pour transférer de l'énergie du circuit secondaire vers le circuit primaire lorsqu'une source de tension continue est appliquée entre ses bornes s1 et s2. En d'autres termes, le circuit 308 d'une cellule élémentaire de conversion est non seulement apte à redresser une tension variable (AC) reçue aux bornes de l'enroulement secondaire Ws en une tension continue (DC) fournie entre les bornes de sortie s1 et s2 de la cellule, mais peut en outre être commandé pour convertir une tension continue (DC) appliquée entre les bornes s1 et s2 de la cellule en une tension variable (AC) fournie aux bornes de l'enroulement secondaire Ws. De plus, le circuit 307 d'une cellule élémentaire de conversion est non seulement apte à convertir une tension continue (DC) reçue entre ses bornes e1 et e2 en une tension variable (AC) fournie aux bornes de l'enroulement primaire Wp, mais peut en outre être commandé pour redresser une tension variable (AC) reçue aux bornes de l'enroulement primaire Wp en une tension continue (DC) fournie entre les bornes d'entrée e1 et e2 de la cellule.

Selon un autre aspect d'un mode de réalisation, on prévoit de commander les cellules 303 ne participant pas à la fourniture de la tension de sortie V_{OUT} (cellules déconnectées) pour transférer de l'énergie électrique de leur circuit secondaire vers leur circuit primaire de façon à maintenir à un niveau de charge approprié les éléments capacitifs d'entrée Cᵢₙ des cellules 303 désactivées. Dans cet exemple, le circuit 306 est configuré non seulement pour commander les cellules activées pour transférer de l'énergie de leur circuit primaire vers leur circuit secondaire, mais également pour commander les cellules déconnectées pour transférer de l'énergie de leur circuit secondaire vers leur circuit primaire. En d'autres termes, le circuit de contrôle 306 est configuré pour, dans un même mode de fonctionnement, commander simultanément des cellules activées pour transférer de l'énergie électrique du circuit primaire vers le circuit secondaire, et des cellules non activées pour transférer de l'énergie électrique du circuit secondaire vers le circuit primaire.

Un avantage du convertisseur 300 est qu'il permet de maintenir à un niveau de charge (ou de tension) approprié les éléments capacitifs d'entrée Cᵢₙ des cellules élémentaires ne participant pas à la fourniture de la tension de sortie, ce qui évite des problèmes de reconfiguration du convertisseur, sans pour cela prévoir une alimentation externe spécifiquement dédiée à cette fonction.

Un autre avantage du convertisseur 300 est que chaque cellule élémentaire de conversion 303 comprend son propre circuit primaire et son propre circuit secondaire couplés l'un à l'autre. Les performances de conversion, et notamment le facteur de qualité et le rendement en puissance, peuvent ainsi être optimisés cellule par cellule. Ceci permet d'obtenir, au moins dans certaines configurations du convertisseur, des performances nettement meilleures que dans un convertisseur du type décrit en relation avec la figure 2, comprenant un unique circuit secondaire couplé à une pluralité de circuits primaires.

Un autre avantage du convertisseur 300 est qu'il est entièrement bidirectionnel. En particulier, on peut prévoir un mode d'utilisation du convertisseur 300 dans lequel toutes les cellules de conversion 303, qu'elles soient activées ou non, sont commandées pour transférer de l'énergie de leur circuit secondaire vers leur circuit primaire, de façon à convertir une tension continue d'entrée appliquée entre les bornes S1 et S2 du convertisseur en une tension continue de sortie fournie entre les bornes E1 et E2 du convertisseur. Dans ce cas, comme dans le mode d'utilisation décrit précédemment, les cellules activées participent à la fourniture de la tension de sortie et transfèrent une quantité d'énergie qui dépend notamment de la charge (non représentée) alimentée par le convertisseur, et les cellules déconnectées ne participent pas à la fourniture de la tension de sortie et transfèrent uniquement la quantité d'énergie nécessaire au maintien de la charge de l'élément capacitif d'entrée Cᵢₙ.

Dans un mode de réalisation préféré, les interrupteurs de configuration SW1 et SW2 de chaque cellule sont intégrés sur une puce de circuits intégrés ensemble avec d'autres éléments de la cellule, par exemple ensemble avec des interrupteurs de découpage de la cellule. Cette puce peut en outre comprendre des circuits d'amplification pour garantir des commutations franches et avec le moins de pertes possible des interrupteurs SW1 à SW6. Cette puce peut aussi comprendre des circuits de commande mettant en oeuvre des fonctions de contrôle du coefficient de transformation de la cellule, de contrôle du niveau de courant dans la cellule, et/ou de contrôle du sens de circulation du courant dans la cellule, par exemple en jouant sur le déphasage des interrupteurs de découpage de la cellule. Cette puce, et notamment les circuits d'amplification et de commande associés aux interrupteurs SW1 à SW6 (aussi appelés circuits de pilotage rapproché des interrupteurs SW1 à SW6), peuvent être alimentés par l'énergie stockée dans le condensateur Cᵢₙ de la cellule (c'est-à-dire par la tension entre les bornes e1 et e2). Dans ce cas, les circuits externes à la cellule, à savoir les circuits 305 et 306 dans l'exemple représenté, ne fournissent à la cellule que des signaux de consigne (activation ou non de la cellule, sens de fonctionnement de la cellule, valeur du coefficient de transformation ou du niveau de courant dans la cellule, etc.). En d'autres termes, tout ou partie du circuit 306 (CONVERTING CELL CONTROLLER) peut être déporté localement dans les cellules 303, et alimenté par l'énergie stockée dans les condensateurs Cᵢₙ. Dans un exemple de réalisation, le coefficient de transformation des cellules déconnectées du convertisseur (cellules transférant de l'énergie de leur circuit secondaire vers leur circuit primaire) peut être choisi de façon à maintenir la tension entre les bornes e1 et e2 de la cellule désactivée à une valeur optimale permettant une réactivation efficace de la cellule (notamment de façon à maintenir une polarisation optimale de l'interrupteur de configuration SW2 qui court-circuite l'étage primaire de la cellule).

La figure 4 est un schéma électrique représentant de façon plus détaillée un exemple de réalisation d'un convertisseur configurable 400 du type décrit en relation avec la figure 3. En particulier, par rapport à la figure 3, les circuits de commande 307 et 308 des étages primaire et secondaire des cellules élémentaires de conversion ont été détaillés. Les éléments déjà décrits en relation avec la figure 3 ne seront pas décrits à nouveau ci-après.

Dans chaque cellule élémentaire de conversion 303, le circuit 307 de commande de l'étage primaire comprend quatre interrupteurs de découpage, respectivement SW3, SW4, SW5 et SW6, montés en pont complet entre les bornes d'entrée e1 et e2 de la cellule. L'enroulement primaire Wp relie les points milieux des deux bras du pont. Des éléments capacitifs et inductifs de résonance (non représentés) peuvent être connectés en série avec l'enroulement Wp pour fixer la fréquence de résonance du circuit primaire. De plus, dans chaque cellule 303, le circuit 308 de commande de l'étage secondaire comprend quatre interrupteurs de découpage, respectivement SW7, SW8, SW9 et SW10, montés en pont complet entre les bornes de sortie s1 et s2 de la cellule. L'enroulement secondaire Ws relie les points milieux des deux bras du pont. Des éléments capacitifs et inductifs de résonance (non représentés) peuvent être connectés en série avec l'enroulement Ws pour fixer la fréquence de résonance du circuit secondaire.

Les interrupteurs SW1 à SW10 sont des interrupteurs bidirectionnels en courant, par exemple des transistors MOS. Les interrupteurs SW3 à SW6 du circuit 307 peuvent être commandés soit pour convertir une tension d'entrée continue appliquée entre les bornes e1 et e2 de la cellule 303 en une tension variable fournie aux bornes de l'enroulement primaire Wp (transfert d'énergie du primaire vers le secondaire), soit pour redresser une tension variable reçue aux bornes de l'enroulement primaire Wp en une tension continue fournie entre les bornes e1 et e2 de la cellule 303 (transfert d'énergie du secondaire vers le primaire) . En outre, les interrupteurs SW7 à SW10 du circuit 308 peuvent être commandés soit pour redresser une tension variable reçue aux bornes de l'enroulement secondaire Ws en une tension continue fournie entre les bornes s1 et s2 de la cellule 303 (transfert d'énergie du primaire vers le secondaire), soit pour convertir une tension continue appliquée entre les bornes s1 et s2 de la cellule 303 en une tension variable fournie aux bornes de l'enroulement secondaire Ws (transfert d'énergie du secondaire vers le primaire). On notera qu'en l'absence d'une énergie suffisante pour contrôler correctement les commutations des interrupteurs SW1 à SW6 ou SW7 à SW10, par exemple lors d'une phase de mise sous tension du convertisseur, les redressements et transferts d'énergie se font par l'intermédiaire des diodes intrinsèques aux transistors MOS.

A titre d'exemple, pour inverser le sens du transfert d'énergie dans une cellule élémentaire 303, le circuit de contrôle 306 peut être configuré pour faire varier le déphasage entre les commutations des interrupteurs du primaire et les commutations des interrupteurs du secondaire. Le circuit de contrôle 306 peut aussi être configuré pour faire varier la fréquence de commutation et/ou le rapport cyclique de commutation des interrupteurs de découpage SW3 à SW10. On notera qu'en faisant varier un ou plusieurs des paramètres susmentionnés (déphasage, fréquence et rapport cyclique), il est possible d'ajuster le rapport de transformation d'une cellule élémentaire autour d'un rapport de transformation nominal. Ceci procure une possibilité supplémentaire de réglage du convertisseur. En d'autres termes, le coefficient de transformation ou le rapport de courant de chaque cellule est réglable individuellement. A titre d'exemple, une référence de phase peut être définie pour chaque cellule par le circuit secondaire de la cellule, et le réglage de la cellule peut être obtenu en jouant sur le déphasage des interrupteurs du primaire par rapport aux interrupteurs du secondaire. Dans ce cas, on pourra prévoir que les circuits secondaires du convertisseur fonctionnent tous en phase, ou, alternativement, qu'ils fonctionnent avec un décalage de phase (ce qui permet de faciliter d'éventuelles opérations de filtrage des signaux de commande).

Des modes de réalisation particuliers de la présente invention ont été décrits. Diverses variantes et modifications apparaîtront à l'homme de l'art.

En particulier, l'invention ne se limite pas à l'exemple de cellule élémentaire 303 décrit en relation avec la figure 4. Plus généralement, l'homme du métier saura réaliser un convertisseur du type décrit ci-dessus quelle que soit la structure de la cellule élémentaire, pour autant que chaque cellule élémentaire comprenne un circuit primaire et un circuit secondaire couplés l'un à l'autre et formant un transformateur isolant les bornes d'entrée de la cellule de ses bornes de sortie, et pour autant que chaque cellule soit bidirectionnelle en courant.

En outre, pour accroître les possibilités de conversion offertes par un unique composant, l'homme du métier saura réaliser un composant comprenant une pluralité de convertisseurs configurables du type décrit en relation avec les figures 3 et 4, ce composant comprenant deux bornes d'entrée et deux bornes de sortie pour chaque convertisseur, et au moins un circuit de contrôle pour commander les interrupteurs de configuration et de découpage des convertisseurs. On notera que le composant peut comprendre un circuit de contrôle par convertisseur, ou un circuit de contrôle commun à tous les convertisseurs. Alternativement, le circuit de contrôle peut être externe au composant et commander des convertisseurs d'un ou plusieurs composants. Le choix d'associer ou non les convertisseurs et la façon de les associer (série ou parallèle en entrée, série ou parallèle en sortie) peut être laissé à l'utilisateur, les associations pouvant par exemple être réalisées en soudant des éléments de contact du composant (un élément de contact pouvant être un plot de connexion, une bille de contact, ou tout autre élément de connexion connu).

## Revendications

1. Convertisseur (300) de tension comprenant une pluralité de cellules (303) de conversion bidirectionnelles, chaque cellule comportant :
un circuit primaire (307, Wp) et un circuit secondaire (308, Ws) isolé du circuit primaire, le circuit primaire et le circuit secondaire comprenant respectivement un enroulement primaire (Wp) et un enroulement secondaire (Ws) couplés l'un à l'autre ;
un élément capacitif d'entrée (Cᵢₙ) entre des première (e1) et deuxième (e2) bornes d'entrée de la cellule, côté circuit primaire ; et
des interrupteurs d'activation (SW1, SW2) et un circuit de pilotage des interrupteurs d'activation alimenté par la tension aux bornes dudit élément capacitif d'entrée (Cᵢₙ)"
dans lequel :
chaque cellule peut être activée ou désactivée dynamiquement par l'intermédiaire de ses interrupteurs d'activation (SW1, SW2) de façon à ajuster le rapport de transformation total du convertisseur ;
les circuits primaires des cellules activées sont reliés en série ;
les circuits primaires des cellules non-activées sont isolés des circuit primaires des cellules activées ; et
les circuits secondaires des cellules activées et des cellules non-activées sont reliés en parallèle,
le convertisseur comportant en outre au moins un circuit de contrôle (306) configuré pour, dans un premier mode de fonctionnement, commander simultanément des cellules activées pour transférer de l'énergie électrique du circuit primaire vers le circuit secondaire, et des cellules non activées pour transférer de l'énergie électrique du circuit secondaire vers le circuit primaire.

2. Convertisseur (300) selon la revendication 1, dans lequel ledit au moins un circuit de contrôle (306) est en outre configuré pour, dans un deuxième mode de fonctionnement, commander les cellules activées et les cellules non activées pour transférer de l'énergie électrique du circuit secondaire vers le circuit primaire.

3. Convertisseur (300) selon la revendication 1 ou 2, dans lequel chaque cellule (303) comprend en outre un élément capacitif de sortie (Cₒᵤₜ) entre des première (s1) et deuxième (s2) bornes de sortie de la cellule, côté circuit secondaire.

4. Convertisseur (300) selon l'une quelconque des revendications 1 à 3, dans lequel le circuit primaire de chaque cellule (303) comprend quatre interrupteurs de découpage (SW3, SW4, SW5, SW6) montés en pont complet, l'enroulement primaire (Wp) reliant les points milieux des deux bras du pont.

5. Convertisseur (300) selon la revendication 4, dans lequel chaque cellule (303) comprend en outre un circuit de pilotage des interrupteurs de découpage du circuit primaire, alimenté par la tension aux bornes dudit élément capacitif d'entrée (Cᵢₙ).

6. Convertisseur (300) selon l'une quelconque des revendications 1 à 5, dans lequel le circuit secondaire de chaque cellule (303) comprend quatre interrupteurs de découpage (SW7, SW8, SW9, SW10) montés en pont complet, l'enroulement secondaire (Ws) reliant les points milieux des deux bras du pont.

7. Composant comprenant une pluralité de convertisseurs (300) conformes à l'une quelconque des revendications 1 à 6, ce composant ayant au moins quatre éléments de connexion par convertisseur, reliés respectivement à des première (E1), deuxième (E2), troisième (S1) et quatrième (S2) bornes du convertisseur.

8. Procédé de commande d'un convertisseur (300) de tension comprenant une pluralité de cellules (303) de conversion bidirectionnelles, dans lequel :
chaque cellule comporte un circuit primaire (307, Wp) et un circuit secondaire (308, Ws) isolé du circuit primaire, le circuit primaire et le circuit secondaire comprenant respectivement un enroulement primaire (Wp) et un enroulement secondaire (Ws) couplés l'un à l'autre ;
chaque cellule comporte un élément capacitif d'entrée (Cᵢₙ) entre des première (e1) et deuxième (e2) bornes d'entrée de la cellule, côté circuit primaire ;
chaque cellule comprend des interrupteurs d'activation (SW1, SW2) et un circuit de pilotage des interrupteurs d'activation alimenté par la tension aux bornes dudit élément capacitif d'entrée (Cᵢₙ) ;
chaque cellule peut être activée ou désactivée dynamiquement par l'intermédiaire de ses interrupteurs d'activation (SW1, SW2) de façon à ajuster le rapport de transformation total du convertisseur ;
les circuits primaires des cellules activées sont reliés en série ;
les circuits primaires des cellules non-activées sont isolés des circuit primaires des cellules activées ; et
les circuits secondaires des cellules activées et des cellules non-activées sont reliés en parallèle,
ce procédé comprenant l'étape suivante :
commander simultanément des cellules activées pour transférer de l'énergie électrique du circuit primaire vers le circuit secondaire, et des cellules non activées pour transférer de l'énergie électrique du circuit secondaire vers le circuit primaire.

## Patentansprüche

1. Spannungswandler (300), der eine Vielzahl von bidirektionalen Wandlerzellen (303) umfasst, wobei jede Zelle umfasst:
eine Primärschaltung (307, Wp) und eine von der Primärschaltung isolierte Sekundärschaltung (308, Ws), wobei die Primärschaltung und die Sekundärschaltung jeweils eine Primärwicklung (Wp) und eine Sekundärwicklung (Ws) umfassen, die miteinander gekoppelt sind;
ein kapazitives Eingangselement (Cᵢₙ) zwischen ersten (e1) und zweiten (e2) Eingangsklemmen der Zelle auf Primärschaltungsseite; und
Aktivierungsschalter (SW1, SW2) und eine Schaltung zum Ansteuern der Aktivierungsschalter, die mit der Spannung an den Klemmen des kapazitiven Eingangselements (Cᵢₙ) gespeist wird,
wobei:
jede Zelle mittels ihrer Aktivierungsschalter (SW1, SW2) dynamisch aktiviert oder deaktiviert werden kann, um das Gesamt-Transformationsverhältnis des Wandlers anzupassen;
die Primärschaltungen der aktivierten Zellen in Reihe geschaltet sind;
die Primärschaltungen der nicht aktivierten Zellen von den Primärschaltungen der aktivierten Zellen isoliert sind; und
die Sekundärschaltungen der aktivierten Zellen und der nicht aktivierten Zellen parallelgeschaltet sind,
wobei der Wandler weiter mindestens eine Steuerschaltung (306) umfasst, die so konfiguriert ist, dass sie in einem ersten Betriebsmodus gleichzeitig aktivierte Zellen so, dass elektrische Energie von der Primärschaltung zur Sekundärschaltung transferiert wird, und nicht aktivierte Zellen so steuert, dass elektrische Energie von der Sekundärschaltung zur Primärschaltung transferiert wird.

2. Wandler (300) nach Anspruch 1, wobei die mindestens eine Steuerschaltung (306) weiter so konfiguriert ist, dass sie in einem zweiten Betriebsmodus die aktivierten Zellen und die nicht aktivierten Zellen so steuert, dass elektrische Energie von der Sekundärschaltung zur Primärschaltung transferiert wird.

3. Wandler (300) nach Anspruch 1 oder 2, wobei jede Zelle (303) weiter ein kapazitives Ausgangselement (Cₒᵤₜ) zwischen ersten (s1) und zweiten (s2) Ausgangsklemmen der Zelle auf Sekundärschaltungsseite umfasst.

4. Wandler (300) nach einem der Ansprüche 1 bis 3, wobei die Primärschaltung jeder Zelle (303) vier Trennschalter (SW3, SW4, SW5, SW6) umfasst, die zur Vollbrücke verschaltet sind, wobei die Primärwicklung (Wp) die Mittelpunkte der zwei Schenkel der Brücke verbindet.

5. Wandler (300) nach Anspruch 4, wobei jede Zelle (303) weiter eine Schaltung zum Ansteuern der Trennschalter der Primärschaltung umfasst, die mit der Spannung an den Klemmen des kapazitiven Eingangselements (Cᵢₙ) gespeist wird.

6. Wandler (300) nach einem der Ansprüche 1 bis 5, wobei die Sekundärschaltung jeder Zelle (303) vier Trennschalter (SW7, SW8, SW9, SW10) umfasst, die zur Vollbrücke verschaltet sind, wobei die Sekundärwicklung (Ws) die Mittelpunkte der zwei Schenkel der Brücke verbindet.

7. Bauteil, das eine Vielzahl von Wandlern (300) nach einem der Ansprüche 1 bis 6 umfasst, wobei dieses Bauteil mindestens vier Anschlusselemente pro Wandler aufweist, die jeweils mit ersten (E1), zweiten (E2), dritten (S1) und vierten (S2) Klemmen des Wandlers verbunden sind.

8. Verfahren zum Steuern eines Spannungswandlers (300), der eine Vielzahl von bidirektionalen Wandlerzellen (303) umfasst, wobei:
jede Zelle eine Primärschaltung (307, Wp) und eine von der Primärschaltung isolierte Sekundärschaltung (308, Ws) umfasst, wobei die Primärschaltung und die Sekundärschaltung jeweils eine Primärwicklung (Wp) und eine Sekundärwicklung (Ws) umfassen, die miteinander gekoppelt sind;
jede Zelle ein kapazitives Eingangselement (Cᵢₙ) zwischen ersten (e1) und zweiten (e2) Eingangsklemmen der Zelle auf Primärschaltungsseite umfasst;
jede Zelle Aktivierungsschalter (SW1, SW2) und eine Schaltung zum Ansteuern der Aktivierungsschalter umfasst, die mit der Spannung an den Klemmen des kapazitiven Eingangselements (Cᵢₙ) gespeist wird;
jede Zelle mittels ihrer Aktivierungsschalter (SW1, SW2) dynamisch aktiviert oder deaktiviert werden kann, um das Gesamt-Transformationsverhältnis des Wandlers anzupassen;
die Primärschaltungen der aktivierten Zellen in Reihe geschaltet sind;
die Primärschaltungen der nicht aktivierten Zellen von den Primärschaltungen der aktivierten Zellen isoliert sind; und
die Sekundärschaltungen der aktivierten Zellen und der nicht aktivierten Zellen parallelgeschaltet sind,
wobei dieses Verfahren den folgenden Schritt umfasst:
gleichzeitiges Steuern der aktivierten Zellen so, dass elektrische Energie von der Primärschaltung zur Sekundärschaltung transferiert wird, und der nicht aktivierten Zellen so, dass elektrische Energie von der Sekundärschaltung zur Primärschaltung transferiert wird.

## Claims

1. Voltage converter (300) comprising a plurality of two-directional conversion cells (303), each cell comprising:
a primary circuit (307, Wp) and a secondary circuit (308, Ws) isolated from the primary circuit, the primary circuit and the secondary circuit respectively comprising a primary coiling (Wp) and a secondary coiling (Ws) coupled to one another;
an input capacity element (Cᵢₙ) between first (e1) and second (e2) input terminals of the cell, on the primary circuit side; and
activation switches (SW1, SW2) and a circuit for controlling the activation switches supplied by the voltage at the terminals of said input capacity element (Cᵢₙ),
wherein:
each cell can be activated or deactivated dynamically by way of the activation switches (SW1, SW2) thereof, so as to adjust the total transformation ratio of the converter;
the primary circuits of the activated cells are connected in series;
the primary circuit of the non-activated cells are isolated from the primary circuits of the activated cells; and
the secondary circuits of the activated cells and of the non-activated cells are connected in parallel,
the converter further comprising at least one control circuit (306) configured to, in a first operating mode, simultaneously control the activated cells to transfer electrical energy from the primary circuit to the secondary circuit, and the non-activated cells to transfer electrical energy from the secondary circuit to the primary circuit.

2. Converter (300) according to claim 1, wherein said at least one control circuit (306) is furthermore configured to, in a second operating mode, control the activated cells and the non-activated cells to transfer electrical energy from the secondary circuit to the primary circuit.

3. Converter (300) according to claim 1 or 2, wherein each cell (303) further comprises an output capacity element (Cₒᵤₜ) between the first (s1) and second (s2) output terminals of the cell, on the secondary circuit side.

4. Converter (300) according to any one of claims 1 to 3, wherein the primary circuit of each cell (303) comprises four cut-off switches (SW3, SW4, SW5, SW6) in a full-bridge configuration, the primary coiling (Wp) connecting the middle points of the two arms of the bridge.

5. Converter (300) according to claim 4, wherein each cell (303) further comprises a circuit for controlling the cut-off switches of the primary circuit, supplied by the voltage at the terminals of said input capacity element (Cᵢₙ).

6. Converter (300) according to any one of claims 1 to 5, wherein the secondary circuit of each cell (303) comprises four cut-off switches (SW7, SW8, SW9, SW10) in a full-bridge configuration, the secondary coiling (Ws) connecting the middle points of the two arms of the bridge.

7. Component comprising a plurality of converters (300) according to any one of claims 1 to 6, this component having at least four connecting elements per converter, connected respectively to the first (E1), second (E2), third (S1) and fourth (S2) terminals of the converter.

8. Method for controlling a voltage converter (300) comprising a plurality of two-directional conversion cells (303), wherein:
each cell comprises a primary circuit (307, Wp) and a secondary circuit (308, Ws) isolated from the primary circuit, the primary circuit and the secondary circuit respectively comprising a primary coiling (Wp) and a secondary coiling (Ws) coupled with one another;
each cell comprises an input capacity element (Cᵢₙ) between the first (e1) and second (e2) input terminals of the cell, on the primary circuit side;
each cell comprises activation switches (SW1, SW2) and a circuit for controlling the activation switches supplied by the voltage at the terminals of said input capacity element (Cᵢₙ);
each cell can be activated or deactivated dynamically by way of the activation switches (SW1, SW2) thereof so as to adjust the total transformation ratio of the converter;
the primary circuits of the activated cells are connected in series;
the primary circuits of the non-activated cells are isolated from the primary circuits of the activated cells; and
the secondary circuits of the activated cells and of the non-activated cells are connected in parallel,
this method comprising the following step:
simultaneously controlling the activated cells to transfer electrical energy from the primary circuit to the secondary circuit, and the non-activated cells to transfer electrical energy from the secondary circuit to the primary circuit.
